# FASCICULE DE BREVET EUROPEEN

(11) **EP 4 272 311 B1**
(45) Date de publication et mention de la délivrance du brevet: **19.02.2025**
(21) Numéro de dépôt: 21852058.3
(22) Date de dépôt: 28.12.2021
(51) Int. Cl.: H02S 40/30, H02S 30/10

(54) **CENTRALE PHOTOVOLTAÏQUE, A DIFFERENCE DE POTENTIEL LIMITEE DANS CHAQUE MODULE PHOTOVOLTAÏQUE**
FOTOVOLTAISCHES KRAFTWERK MIT BEGRENZTER POTENTIALDIFFERENZ IN JEDEM FOTOVOLTAISCHEN MODUL
PHOTOVOLTAIC POWER PLANT WITH LIMITED POTENTIAL DIFFERENCE IN EACH PHOTOVOLTAIC MODULE

(30) Priorité: 29.12.2020 FR 2014229
(43) Date de publication de la demande: 08.11.2023
(73) Titulaire: Commissariat à l'Energie Atomique et aux Energies Alternatives, 75015 Paris (FR)
(72) Inventeur: MARTIN, Jérémy, 38054 Grenoble Cedex 09 (FR); PILAT, Eric, 38054 Grenoble Cedex 09 (FR)
(74) Mandataire: Brevalex
(86) Numéro de dépôt international: PCT/FR2021/052460
(87) Numéro de publication internationale: WO 2022/144526

(56) Documents cités:
- DE-A1- 102017 127 466
- KR-B1- 102 085 514
- US-A1- 2010 288 327

## Description

### DOMAINE TECHNIQUE ET ART ANTERIEUR

L'invention concerne les installations photovoltaïques et, en particulier, une nouvelle structure de module photovoltaïque.

Les installations utilisant des panneaux photovoltaïques (PV) sont appelées à se développer.

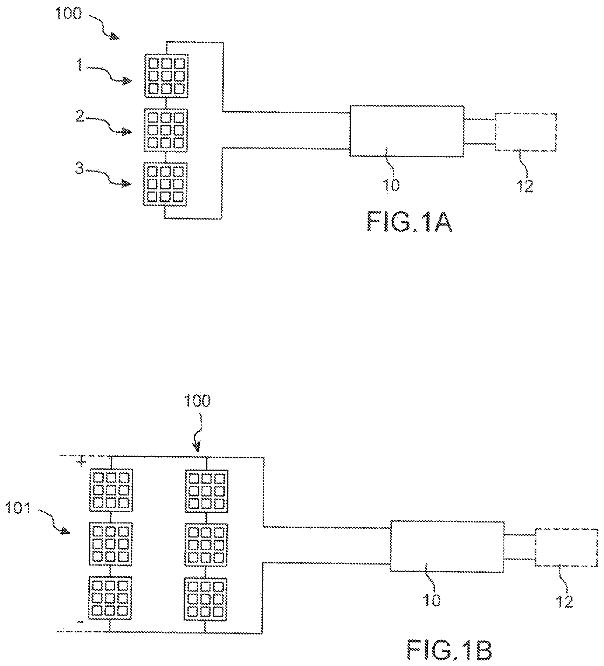

La figure 1A représente une centrale photovoltaïque (PV) de type connu, avec une chaîne (ou « string » en terminologie anglo-saxonne) 100 de 3 modules photovoltaïques 1, 2, 3 mis en série et un ou plusieurs convertisseur(s) (ou onduleur(s)) 10, relié au réseau électrique 12 le plus souvent par l'intermédiaire d'un ou plusieurs transformateur(s), chaque entrée de module étant reliée à la sortie du module précédent dans la chaîne. Cette représentation est simplifiée car, dans une centrale photovoltaïque moyenne, une chaîne comporte beaucoup plus de 3 modules, le nombre de modules dépendant notamment de la puissance électrique que la centrale doit fournir. En outre, une installation photovoltaïque peut comporter plusieurs chaînes 100, 101, ...disposées en parallèle, comme illustré en figure 1B.

La conception des fermes photovoltaïques, en pleine croissance, s'appuie sur diverses approches techniques permettant d'optimiser la production. Une de ces approches consiste à augmenter le nombre de modules PV connectés en série par chaîne pour en augmenter la puissance. Cette configuration améliorée engendre une augmentation de la tension électrique aux bornes des modules PV et donc au niveau des cellules composant ce module.

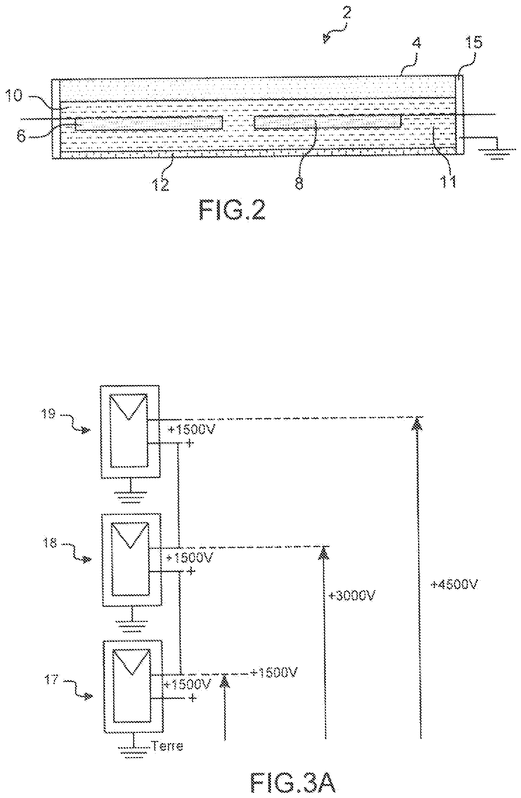

Un exemple de structure connue d'un module photovoltaïque est représenté en figure 2. Ce module 2 comporte une face avant 4 en verre ou en un polymère de type « PET », transparent.

Des cellules solaires 6, 8 sont enrobées entre une 1^{ère} couche d'encapsulation 10 et une 2^{ème} couche d'encapsulation 11, toutes deux par exemple en un polymère thermoplastique, généralement de l'»EVA » (Éthylène-acétate de vinyle).

Une face arrière 12, également appelée « Backsheet », qui comporte par exemple un ensemble laminé de polymères, communément désigné « TPT » car le plus souvent composé de Tedlar-Polyester-Tedlar (le terme « Tedlar » étant l'appellation commerciale de DuPont pour désigner le PVF (Polyvinyl fluoride)) ; en variante, la face arrière 12 est un verre solaire.

La référence 15 désigne le cadre, fixé à un châssis métallique (non représenté), lequel est relié à la terre.

La différence de potentiel, laquelle peut être importante, entre les cellules 6, 8 et le cadre 15 (ou la périphérie du module), génère une augmentation du champ électrique interne au module.

Ce champ électrique favorise la migration ionique, et l'accumulation de sels (par exemple de sodium, Na⁺) à la surface des cellules. Ceux-ci provoquent une polarisation de la surface et un shuntage. En conséquence, la fonctionnalité de la jonction PN des cellules touchées est perturbée ce qui réduit la puissance des panneaux. Après plusieurs années, le panneau produit moins d'énergie. Si le problème n'est pas traité, l'encapsulant, parfois, jaunit mais, surtout, perd son pouvoir "adhésif". Le module finit par se délaminer et donc l'eau s'infiltre dans le module photovoltaïque. Cette dégradation des panneaux photovoltaïques, est connue sous l'expression « Potential Induced Degradation », ou « PID » (voir par exemple la norme CEI TS 62804-1: 2015 «Modules photovoltaïques (PV) - Méthodes de test pour la détection de la dégradation induite par potentiel (PID)», ou encore l'article de S.Koch et al. Intitulé « Potential-induced dégradation effects on crystalline silicon cells with various anti-reflective coatings », paru dans « 27th European Photovoltaic Solar Energy Conférence and Exhibition », p.1985-1990 » en 2013).

D'autre part, indépendamment de ce phénomène, la différence de potentiel induite entre les cellules et la périphérie du module peut engendrer un claquage des couches isolantes du module, et en conséquence l'apparition d'un arc électrique entretenu, pouvant occasionner un début d'incendie.

On connaît une structure de centrale photovoltaïque, selon la demande WO2015/015112, dans laquelle on supprime un transformateur reliant l'onduleur au réseau électrique haute tension. Mais l'accroissement éventuel de la tension des chaînes photovoltaïques par rapport à la terre conduit aux problèmes physiques mentionnés ci-dessus.

En figure 3A, on a représenté schématiquement 3 modules hypothétiques de forte puissance 17, 18, 19 disposés en série et montés comme indiqué ci-dessus, chaque module étant relié à la terre par son cadre ou sa périphérie. Dans l'exemple de principe illustré, la tension aux bornes de chaque module est de 1500 V. Chaque entrée (-) de module étant connectée à la sortie (+) du module précédent, les cellules du module 18, resp.19, sont soumises à une tension, par rapport à la terre et donc par rapport à leur cadre ou sa périphérie, de 3000 V, resp. de 4500 V. Ces tensions augmentant avec le nombre de modules de forte puissance en série, elles sont génératrices de problèmes de type « PID ».

Dans la pratique, de tels modules présentant une différence de potentiel de 1500V à leurs bornes sont rares (un module typique a par exemple environ 30V-40 V à ses bornes). Cependant, une installation photovoltaïque peut être composée de plusieurs chaînes, montées en série, de modules eux-mêmes montés en série au sein de la chaîne. Chaque chaîne peut alors présenter à ses bornes ce type de tension élevée. Chaque cellule au sein d'un module se trouvant dans une chaîne subira alors les mêmes ordres de grandeur de différences de potentiels que pour l'exemple de la figure 3A. Pour des installations photovoltaïques comportant plusieurs centaines, ou même plusieurs milliers, de modules, cet accroissement de la tension va être source des problèmes mentionnés ci-dessus.

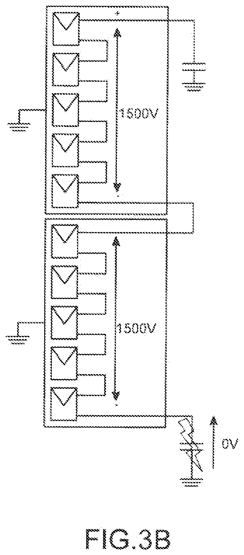

La figure 3B illustre les problèmes de claquage : Ici un pôle du générateur PV (constitué de deux modules PV) est mis à la référence (terre ou masse métallique) accidentellement (par exemple par rupture d'isolement). La borne négative du générateur est portée à 0V et la borne positive du générateur est portée à 2x1500V=3kV. Ceci peut entraîner un nouveau claquage entre le pole positif et la terre (menant à la mise en court-circuit générale du générateur) dans la mesure où les modules sont prévus pour fonctionner sous 1500V maximum.

Le document KR102085514B1 décrit une centrale photovoltaïque.

L'invention vise à résoudre tout ou partie de ces problèmes.

### EXPOSE DE L'INVENTION

L'invention concerne d'abord une centrale photovoltaïque telle que définie par l'objet de la revendication 1.

De préférence, ce sont tous les modules parmi, respectivement, les N modules de la chaîne ou tous les modules des N chaînes ou des N groupes qui sont ainsi connectés, sauf éventuellement le premier ou le dernier.

Selon des exemples non nécessairement couvert par l'objet des revendications mais utiles à la compréhension de l'invention, la/les masse(s) métallique(s) du module ou de (ou des) modules de la chaîne ou du groupe est/sont mise(s) à un potentiel, non nul, défini par un module ou, respectivement, une chaîne ou un groupe de modules précédent(e) ou suivant(e), par exemple la chaîne ou le groupe de modules précédent(e), par exemple de manière à augmenter le potentiel des masses métalliques au fur et à mesure que l'on somme les tensions des modules ou des chaînes ou des groupes de modules.

De cette manière, on applique au sein de chaque module concerné une différence de potentiel réduite, et donc un champ électrique réduit, entre le cadre ou châssis en métal et chaque cellule du module. Ainsi, on minimise ou on supprime l'effet de champ électrique sur les cellules, et on limite ou on évite les problèmes mentionnés ci-dessus. Les cellules ne sont donc plus soumises aux risques, expliqués ci-dessus, de type « PID », ou de type claquage.

Dans des exemples particuliers le cadre ou le châssis d'au moins un module photovoltaïque peut être connecté :
- à un point de connexion de potentiel haut ou bas, ou de potentiel intermédiaire entre ces deux valeurs, d'un module ou, respectivement, d'un module d'une chaîne ou d'un module d'un groupe, qui ne précède ou ne suit pas immédiatement, dans la série, ledit module ou ladite chaîne à laquelle ledit module appartient ou ledit groupe auquel ledit module appartient ;
- ou à un point de potentiel haut ou bas, ou de potentiel intermédiaire entre ces deux valeurs :
   * dudit module ;
   * ou d'une chaîne ou d'un groupe qui comprend ledit module ;
   * ou d'un module, ou d'une chaîne ou d'un groupe qui précède ou suit immédiatement, dans la série, ledit module ou ladite chaîne à laquelle ledit module appartient ou ledit groupe auquel ledit module appartient.

Selon un exemple utile à la compréhension de l'invention centrale photovoltaïque, le cadre ou le châssis d'au moins un module photovoltaïque est connecté à un point de connexion d'un module ou d'une chaîne ou d'un groupe de la centrale photovoltaïque, qui est un point de potentiel qui est inférieur de moins de 600 V au potentiel bas du dit module ou de potentiel qui est supérieur au potentiel haut dudit module d'une valeur égale à au plus 600V.

Une centrale photovoltaïque selon un exemple utile à la compréhension de l'invention peut comporter :
- N modules photovoltaïques formant une chaîne ou N chaînes de modules photovoltaïques, dans laquelle les cadres de tous les modules d'au moins une même chaîne sont connectés à un même potentiel ;
- et/ou N modules photovoltaïques formant une chaîne ou N chaînes de modules photovoltaïques, le point de connexion dudit au moins un module étant sur la chaîne de K modules comprenant ledit module, par exemple à un potentiel intermédiaire entre le potentiel haut et le potentiel bas de la chaîne ; ce potentiel intermédiaire peut être le potentiel haut ou le potentiel bas du module de rang K/2+1 ou K/2-1 si le nombre K est pair et de rang (K+1)/2 ou (K-1)/2 si le nombre K est impair.

Une centrale photovoltaïque peut notamment comporter :
- une pluralité de modules photovoltaïques formant une chaîne de N modules mis en série, lesdits moyens de connexion pouvant connecter le cadre ou châssis d'un ou plusieurs modules ou de chaque module à un point de potentiel de sortie ou d'entrée, ou de potentiel intermédiaire entre ces deux valeurs, du même module ou d'un autre module, précédent ou suivant dans la chaîne ;
- ou N (N>1) chaînes de modules photovoltaïques, ces chaînes de modules étant connectées en série, lesdits moyens de connexion connectant par exemple le cadre ou châssis d'un ou plusieurs modules ou de chaque module d'au moins une chaîne, à un point de potentiel de sortie ou d'entrée, ou de potentiel intermédiaire entre ces deux valeurs, d'une chaîne, chaque chaîne comportant elle-même un potentiel d'entrée (ou inférieur), ou un plot ou une borne d'entrée, destinée par exemple à être connectée à un tel potentiel d'entrée, et un potentiel de sortie (ou supérieur), ou un plot ou une borne de sortie destinée par exemple à être connectée à un tel potentiel de sortie.

Selon une autre réalisation, une centrale photovoltaïque selon l'invention peut comporter N (N>1) groupes de modules, chaque groupe comportant plusieurs modules photovoltaïques, les modules de chaque groupe étant connectés en parallèle à un boîtier de connexion, les différents boîtiers de connexion étant connectés en série ; par exemple, chacun de ces boîtiers comporte un premier bornier, un deuxième bornier, et un bornier de masse, les sorties basse tension de chaque module d'un même groupe étant reliées au premier bornier du boîtier de connexion associé, les sorties hautes tension de chaque module du même groupe étant reliées au deuxième bornier dudit boîtier de connexion ; éventuellement les cadres ou châssis de chaque module du même groupe peuvent être reliées au bornier de masse dudit boîtier de connexion, lequel peut être par exemple connecté au premier bornier ou au deuxième bornier du groupe ou du, ou d'un, boîtier de connexion précédent ou suivant dans la série.

Selon une variante de l'exemple précédent chaque groupe des N (N>1) groupes de modules est constitué de plusieurs chaînes connectées en parallèle de modules, chaque chaîne comportant un ensemble de modules montés en série. Ces chaînes sont connectées en parallèles auxdits premiers et deuxièmes borniers comme selon la réalisation précédente. Au sein d'un groupe donné, les cadres ou châssis de l'ensemble des modules constituant chaque chaîne peuvent éventuellement être connectés au bornier de masse du boîtier de connexion du groupe, lequel peut être par exemple connecté au premier bornier ou au deuxième bornier du groupe ou du, ou d'un, boîtier de connexion précédent ou suivant dans la série. Alternativement, ledit bornier de masse peut éventuellement être connecté à un des potentiels d'entrée ou sortie d'un des modules du groupe, ou d'un groupe précédent ou suivant dans la série, donnant ainsi accès à un potentiel intermédiaire entre le potentiel du premier bornier ou du deuxième bornier des différents groupes.

Chaque boîtier de connexion peut être lui-même connecté à un convertisseur DC/DC ou DC/AC.

Lorsque chaque convertisseur est de type DC/DC, l'ensemble des convertisseurs peut être relié en série et les bornes basse tension et haute tension de cet ensemble de convertisseurs DC/DC peuvent être reliées à un convertisseur DC/AC.

Pour une centrale selon l'invention comportant plusieurs (par exemple 3) ensembles, chacun de plusieurs groupes de plusieurs modules photovoltaïques, chaque convertisseur peut être de type DC/AC, les convertisseurs de chaque ensemble pouvant être reliés en série et à une des lignes d'un réseau électrique, par exemple un réseau en moyenne tension.

Une centrale photovoltaïque selon l'invention peut comporter en outre des moyens d'isolation électrique entre deux groupes de modules différents.

L'invention concerne également un procédé de fonctionnement d'une centrale photovoltaïque tel que défini par l'objet de la revendication 9.

Selon des exemples utiles à la compréhension de l'invention, le cadre ou le châssis d'au moins un module photovoltaïque est porté :
- au potentiel haut ou au potentiel bas, ou à un potentiel intermédiaire entre ce potentiel haut et ce potentiel bas, d'un module ou, respectivement, d'un module d'une chaîne ou d'un module d'un groupe, qui ne précède ou ne suit pas immédiatement, dans la série, ledit module ou, respectivement, ladite chaîne à laquelle ledit module appartient ou ledit groupe auquel ledit module appartient ;
- ou au potentiel haut ou au potentiel bas, ou à un potentiel intermédiaire entre ce potentiel haut et ce potentiel bas, dudit module ou, respectivement, d'une chaîne ou d'un groupe, comprenant ledit module, ou qui précède ou qui suit immédiatement, dans la série, ledit module ou, respectivement, ladite chaîne à laquelle ledit module appartient ou ledit groupe auquel ledit module appartient ;
- ou à un potentiel sensiblement égal à la moitié du potentiel de la chaîne dans laquelle se situe ledit module, préférentiellement quand l'ensemble des cadres des modules de la chaîne sont au même potentiel.

Dans un exemple particulier le cadre ou le châssis dudit au moins un module photovoltaïque peut avantageusement être connecté à un potentiel d'un module ou d'une chaîne ou d'un groupe de la centrale photovoltaïque, inférieur au potentiel bas V_{b} dudit module d'une valeur égale au plus à 600V (autrement dit : compris entre V_{b} - 600 V et V_{b}) ou supérieur au potentiel haut Vₕ dudit module d'une valeur égale à au plus 600V (autrement dit : compris entre Vₕ + 600 V et Vₕ).

Dans un procédé la centrale photovoltaïque peut comporter :
- N modules photovoltaïques formant une chaîne ou N chaînes de modules photovoltaïques, dans laquelle les cadres de tous les modules d'au moins une même chaîne peuvent être connectés à un même potentiel ;
- et/ou N modules photovoltaïques formant une chaîne ou N chaînes de modules photovoltaïques, ledit au moins un module appartenant à une chaîne de K modules et étant par exemple porté à un potentiel intermédiaire entre le potentiel haut et le potentiel bas de la chaîne ; selon une réalisation particulière ce potentiel intermédiaire peut être le potentiel haut ou le potentiel bas du module de rang K/2+1 ou K/2-1 si le nombre K est pair et de rang (K+1)/2 ou (K-1)/2 si le nombre K est impair.

Dans le cas dans lequel la centrale photovoltaïque comporte N groupes de modules photovoltaïques, les modules de chaque groupe étant connectés en parallèle à un boîtier de connexion, les différents boîtiers de connexion étant connectés en série, les cadres ou châssis de chaque module d'un même groupe peuvent être portés à un potentiel égal au potentiel haut ou au potentiel bas, ou à un potentiel intermédiaire entre ce potentiel haut et ce potentiel bas, dudit groupe, ou d'un groupe de modules connecté au, ou à un, boîtier de connexion précédent ou suivant dans la série.

Par exemple, si chaque moyen de connexion comporte un boîtier de connexion, comportant un premier bornier, un deuxième bornier, et un bornier de masse, les sorties basse tension de chaque module d'un même groupe peuvent être reliées au premier bornier du boîtier de connexion associé, les sorties hautes de chaque module du même groupe peuvent être reliées au deuxième bornier dudit boîtier de connexion ; les cadres ou châssis de chaque module d'un même groupe peuvent être portés à un potentiel égal au potentiel haut ou au potentiel bas, ou à un potentiel intermédiaire entre ce potentiel haut et ce potentiel bas, dudit groupe ou du, ou d'un, boîtier de connexion précédent ou suivant dans la série.

Dans un tel procédé, chaque boîtier de connexion peut être lui-même connecté un convertisseur DC/DC ou DC/AC.

Dans le cas où chaque convertisseur est de type DC/DC, l'ensemble des convertisseurs peut être relié en série et les bornes basse tension et haute tension de cet ensemble de convertisseurs peuvent être reliées à un convertisseur DC/AC.

Dans le cas où la centrale photovoltaïque comporte plusieurs, par exemple 3, ensembles de groupes de plusieurs modules photovoltaïques, chaque convertisseur peut être de type DC/AC, les convertisseurs de chaque ensemble étant reliés en série et à une des lignes d'un réseau électrique, par exemple un réseau en moyenne tension.

### BRÈVE DESCRIPTION DES DESSINS

Les figures 1A-1B représentent schématiquement des installations photovoltaïques de type connu,
La figure 2 représente une réalisation d'un module photovoltaïque connu,
La figure 3A représente schématiquement une structure d'une installation photovoltaïque connue, comportant 3 modules photovoltaïques ou 3 chaînes de modules photovoltaïques et des exemples numériques de tensions,
La figure 3B illustre un problème de claquage dans une installation photovoltaïque connue ;
La figure 4A représente une réalisation de plusieurs chaînes de modules photovoltaïques connectées en série selon l'invention,
La figure 4B représente une autre réalisation de plusieurs chaînes de modules photovoltaïques connectées en série selon l'invention ;
La figure 5 représente une réalisation d'une centrale photovoltaïque selon l'invention, comportant plusieurs groupes de modules photovoltaïques, chaque groupe comportant plusieurs modules photovoltaïques,
La figure 6 représente une autre réalisation d'une centrale photovoltaïque selon l'invention, comportant plusieurs ensembles, chacun de ces ensembles comportant plusieurs groupes de modules photovoltaïques, chaque groupe comportant plusieurs modules photovoltaïques.

### DESCRIPTION DES MODES DE RÉALISATION

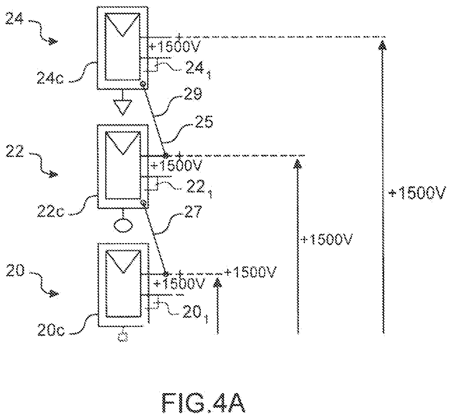

Un exemple d'un premier mode de réalisation de l'invention est représenté en figure 4A. Dans cet exemple, N chaînes 20, 22, 24 de modules photovoltaïques sont connectées en série par des moyens de connexion 27, 29.

Chaque chaîne comporte plusieurs, par exemple environ 30 à 40, modules photovoltaïques, connectés en série. Dans cet exemple : N = 3, mais N peut être plus élevé que 3. Un tel champ de modules photovoltaïques peut par exemple comporter entre 30 et 300 modules raccordés en série pour chaque chaîne, avec N compris entre 2 et 10.

La tension aux bornes de chaque chaîne peut être comprise entre 600 V et 15 kV (par exemple 1,5 kV ou 3 kV ou 10kV).

Chaque chaîne comporte un potentiel d'entrée (ou inférieur), ou un plot ou un point ou une borne d'entrée, destiné(e) à être connectée à un tel potentiel d'entrée, et un potentiel de sortie (ou supérieur), ou un plot ou un point ou une borne de sortie destiné(e) à être connectée à un tel potentiel de sortie.

Chaque module de chaque chaîne peut avoir la structure décrite ci-dessus en lien avec la figure 2. Mais, ici, le cadre ou le châssis de chaque module n'est pas mis à la terre (sauf éventuellement tout ou partie des modules de la 1^{er} chaîne de la série, dont la masse métallique peut être mise à la terre), mais à un potentiel non nul défini par la même chaîne ou une autre chaîne, par exemple la chaîne précédente : ainsi, en figure 4A, les cadres ou les châssis 24c de l'ensemble des modules de la chaîne 24 sont au potentiel d'entrée de la chaîne 24 (qui est aussi ici le potentiel de sortie de la chaîne 22), et les cadres ou le châssis 22c de l'ensemble des modules de la chaîne 22 sont au potentiel d'entrée de la chaîne 22 (qui est aussi ici le potentiel de sortie de la chaîne 20). Ainsi, le potentiel des masses métalliques (ou des cadres ou châssis) peut augmenter au fur et à mesure que l'on somme les tensions de sortie des chaînes de modules. On voit aussi dans l'exemple de la figure 4A la connexion 20₁, 22₁, 24₁ entre le cadre ou châssis et la borne d'entrée de la chaîne correspondante.

Pratiquement, le cadre ou le châssis d'au moins un module, ou de chaque module, de la chaîne n° i (pour 2≤i≤N) est relié au potentiel de sortie de la chaîne de modules précédente (n° i-1 dans la série).

Dans un exemple non couvert par l'invention, le cadre ou le châssis d'au moins un module, ou de chaque module, de la chaîne n° i (1≤i≤N) peut par exemple être relié au potentiel de sortie de la chaîne de modules n°i elle-même, ou encore au potentiel d'entrée de cette même chaîne de modules n°i, ou encore à un potentiel compris entre le potentiel de sortie et le potentiel d'entrée de cette chaîne n°i.

En variante, le cadre ou le châssis de chaque module de la chaîne n° i (notamment pour 2≤i≤N) peut par exemple être mis ou relié au potentiel de sortie ou au potentiel d'entrée, ou encore à un potentiel compris entre ce potentiel de sortie et ce potentiel d'entrée, d'une quelconque chaîne de modules précédente (n° i-1 à n°2 ou à n°1 dans la série) ; par exemple, si i est pair, cela peut être le potentiel de sortie ou d'entrée, ou un potentiel intermédiaire, de la chaîne de rang i/2 ou de rang (i/2) + 1 ou ou de rang (i/2) - 1; ou, si i est impair, cela peut être le potentiel de sortie ou d'entrée, ou un potentiel intermédiaire, de la chaîne de rang (i-1)/2 ou (i+1)/2. Autrement dit, il ne s'agit pas nécessairement d'un potentiel associé à la chaîne immédiatement précédente i-1.

Encore en variante, le cadre ou le châssis d'une chaîne de module n° i (1≤i<N) peut par exemple être relié au potentiel de sortie ou au potentiel d'entrée, ou encore à un potentiel compris entre ce potentiel de sortie et ce potentiel d'entrée, de la chaîne i+1 de modules suivante ou d'une chaîne de modules suivante (avec un n° ≥ i+1 dans la série). Autrement dit, il ne s'agit pas nécessairement d'un potentiel associé à la chaîne immédiatement suivante i+1.

Connecter le cadre ou le châssis d'un module d'une chaîne n°i à un potentiel d'un module ou d'une chaîne de rang supérieur à i dans la série permet de générer, dans ledit module de la chaîne i, un champ électrique qui va, dans ce module de cette chaîne, inverser le sens de migration des éléments ioniques qui sont la cause de l'effet « de shunt » en surface de chaque cellule du module. Cette solution peut permettre de régénérer des modules déjà « malades » et/ou de nettoyer la surface des cellules sans altérer le fonctionnement des modules. Cette solution permet d'inverser les phénomènes de PID, tout en permettant de maintenir la production des panneaux simultanément.

Dans un cas particulier, tous les cadres ou les châssis des modules d'une chaîne i donnée qui comporte K modules sont reliés au potentiel de sortie ou au potentiel d'entrée d'un module de la chaîne, préférentiellement de rang K/2 si K pair ou (K-1)/2 ou (K+1)/2 si K impair. Les effets sont ceux qui ont été décrits ci-dessus.

Si l'on reprend les exemples numériques de tensions de la figure 4A, et en supposant comme représenté l'ensemble des cadres des modules d'une chaîne donnée à un même potentiel, le cadre d'un module de la chaîne 22 est porté à 1500 V (tension définie par la tension de sortie de la chaîne 20) et le cadre d'un module de la chaîne 24 est porté à 3000 V (tension définie par la tension de sortie de la chaîne 22). Les moyens de connexion 27, 29 entre deux chaînes de modules peuvent comporter un câble ou fil de raccordement, par exemple entre deux boîtiers de raccordement (ou « string combiner box ») des chaînes concernées.

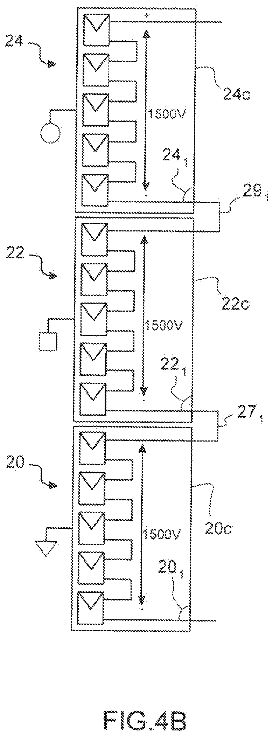

Ceci permet d'établir une différence de potentiel réduite entre les cellules 6, 8 (figure 2) de chaque module et le cadre 15 ou le châssis de ce même module. Les cellules 6, 8 ne sont soumises qu'à une différence de potentiel, avec le cadre 15, qui est réduite par rapport à celle qui apparait, dans la configuration connue (connexion du cadre à la terre). Ainsi, les phénomènes de type migration ionique et/ou d'accumulation de sels en surface des cellules, et l'effet de « PID », sont fortement réduits ou éliminés. Un éventuel claquage des couches isolantes, ou l'apparition d'un arc électrique est également évité. Par exemple, dans la configuration de la figure 3A, dans laquelle chacun des cadres ou châssis des modules est à la terre (0 V), la différence de potentiel entre les cellules de la chaîne 18 de modules et les cadres de ces modules peut atteindre 3000 V, et celle entre les cellules de la chaîne 19 de modules et les cadres de ces modules peut atteindre 4500 V. Dans la structure selon l'invention (figure 4A et figure 4B), la différence de potentiel entre les cellules de la chaîne 22 de modules et le cadre des modules de cette chaîne ne peut atteindre que 1500 V, et celle entre les cellules de la chaîne 24 de modules et le cadre de ces modules ne peut atteindre également que 1500 V.

Ce qui a été exposé ci-dessus peut également s'appliquer, avec les mêmes effets, à une chaîne unique de N modules connectés en série, dans laquelle un cadre ou châssis d'au moins un module i parmi ces N modules, ou le cadre ou châssis de chaque module i parmi ces N modules, est relié à une tension non nulle, d'entrée ou de sortie, dudit module i ou d'un autre module de la chaîne qui peut être :
- le module immédiatement précédent i-1 ou un module de rang strictement inférieur à i-1, notamment pour 1<i≤N ;
- le module immédiatement suivant i+1 ou un module de rang strictement supérieur à i+1, notamment pour 1≤i<N.

Une ou plusieurs chaîne(s) de modules telle(s) que celle décrite(s) ci-dessus, notamment en lien avec la figure 4A, peut ou peuvent être utilisée dans un système tel que celui représenté en figure 1A ou 1B.

Un autre exemple d'un mode de réalisation de l'invention est représenté en figure 4B. Comme dans l'exemple de la figure 4A :
- N chaînes 20, 22, 24 de modules photovoltaïques sont connectées en série, chaque chaîne pouvant comporter plusieurs, par exemple environ 30 à 40, modules photovoltaïques, connectés en série ; dans cet exemple : N = 3, mais N peut être plus élevé que 3. Un tel champ de modules photovoltaïques peut par exemple comporter entre 30 et 300 modules raccordés en série pour chaque chaîne, avec N compris entre 2 et 10 ;
- la tension aux bornes de chaque chaîne peut être comprise entre 600 V et 15 kV (par exemple 1,5 kV ou 3 kV ou 10kV).

Chaque chaîne comporte un potentiel d'entrée (ou inférieur), ou un plot ou un point ou une borne d'entrée, destiné(e) à être connectée à un tel potentiel d'entrée, et un potentiel de sortie (ou supérieur), ou un plot ou un point ou une borne de sortie destiné(e) à être connectée à un tel potentiel de sortie.

Chaque module de chaque chaîne peut avoir la structure décrite ci-dessus en lien avec la figure 2. Mais, ici, le cadre ou le châssis de chaque module n'est pas mis à la terre (sauf éventuellement tout ou partie des modules de la 1^{er} chaîne de la série, dont la masse métallique peut être mise à la terre), mais à un potentiel non nul défini par le potentiel de d'entrée du même module (qui est aussi ici le potentiel de sortie du module précédent) : ainsi, en figure 4B, les cadres ou les châssis 24c de l'ensemble des modules de la chaîne 24 sont au potentiel d'entrée de la chaîne 24 qui est également le potentiel de sortie de la chaîne 22, et les cadres ou le châssis 22c de l'ensemble des modules de la chaîne 22 sont au potentiel d'entrée de la chaîne 22 qui est également le potentiel de sortie de la chaîne 20. Ainsi, le potentiel des masses métalliques (ou des cadres ou châssis) augmente au fur et à mesure que l'on somme les tensions de sortie des chaînes de modules. De plus, ici, la tension des cellules ou de chaque module par rapport aux châssis ou à la carcasse ne dépasse pas 1500 V. Les références 27₁ et 29₁ désignent les connexions entre 2 chaînes voisines. On voit aussi dans l'exemple de la figure 4B la connexion 20₁, 22₁, 24₁ entre le cadre ou châssis 20c, 22c, 24c et la borne d'entrée de la chaîne correspondante.

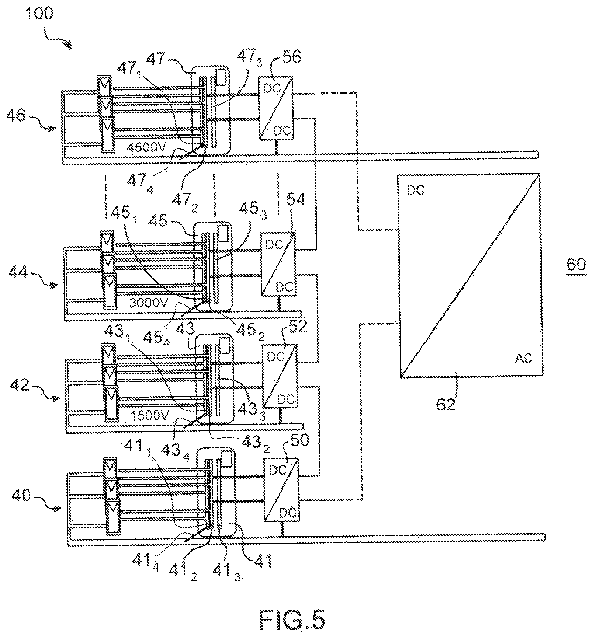

La figure 5 représente un exemple d'un autre mode de réalisation de l'invention, dans lequel un ensemble 100 de N groupes 40, 42, 44, 46 de modules ; dans cet exemple : N = 4, mais N peut être quelconque, par exemple jusqu'à N = 10, chaque groupe de modules comportant un nombre de modules qui peut être par exemple inférieur ou égal à 20000. lci, les modules d'un même groupe sont connectés en parallèle. Ces groupes 40, 42, 44, 46 de modules sont raccordés sur des convertisseurs DC/DC (fonctions MPPT) 50, 52, 54, 56 sans transformateurs intégrés, mis en série de façon à obtenir la tension necessaire (par exemple : 45kV_{DC} pour pouvoir injecter la puissance souhaitée sur un réseau 60 en moyenne tension (par exemple: 20kV_{AC}). Ainsi les groupes de modules sont également mis en série.

Chaque groupe i (1<i≤N) de modules [sauf le 1^{er} groupe (i=1) de modules de la série de N groupes, dont la masse peut éventuellement être mise à la terre] est connecté à un boîtier de raccordement de chaîne 41, 43, 45, 47, lequel comporte un premier bornier 41₁, 43₁, 45₁, 47₁ pour connecter la polarité (-) de chaque module du groupe, un deuxième bornier 41₂, 43₂,45₂, 47₂, pour connecter la polarité (+) de chaque module du groupe, et un troisième bornier, ou barrette de masse, 41₃, 43₃, 45₃, 47₃ pour éventuellement connecter la masse électrique de chaque module du groupe.

Les bornier (+) et (-) de chaque boîtier peuvent être reliées aux bornes d'entrées d'un convertisseur DC/DC 50, 52, 54, 56. L'ensemble des convertisseurs DC/DC peut être connecté en série et les 2 polarités (+) et (-) de la chaîne de convertisseurs en série peuvent être connectées à un convertisseur 62 DC/AC, par exemple de type « Modular Multilevel Converter » ou « Stacked Multilevel Converter » ou « Flying Capacitor Multilevel Converter ».

Chaque cadre d'un module peut être relié au bornier d'entrée (+) 41₁, resp. 43₁, 45₁, 47₁ du boîtier de raccordement du groupe de modules auquel il appartient, par des moyens, par exemple par un câble, de connexion 41₄,43₄,45₄, 47₄. Autrement dit, de manière similaire à ce qui a été expliqué ci-dessus, la masse métallique de chaque module du groupe n° i n'est pas mise à la terre, mais à un potentiel non nul défini par le potentiel d'entrée (ou bas) du groupe n°i de modules auquel ce module appartient et/ou par la borne d'entrée du convertissuer DC/DC correspondant de façon à créer une montée en tension successive du potentiel des masses métalliques. L'effet de protection des cellules 6, 8 de chaque module est celui déjà présenté ci-dessus.

Dans cet exemple, l'étage supérieur, porté à 45kV doit supporter un niveau d'isolement classique où l'on peut utiliser des modules du commerce (classe 600V, 1000V ou 1500V). En variantes (non représentées) non nécessairement couvertes par l'objet des revendications
- la masse métallique de chaque module du groupe n° i peut être mise au potentiel bas du groupe de modules précédent;
- ou une barrette de masse d'un boîtier de raccordement peut être reliée au bornier (+) (potentiel haut) ou au bornier (-) (potentiel bas), d'un boîtier de raccordement d'un groupe de modules précédent, par des moyens de connexion, par exemple un câble ; mais ce boîtier de raccordement précédent n'est pas forcément celui qui précède immédiatement, dans la série, le boîtier de raccordement considéré ;
- ou une barrette de masse d'un boîtier de raccordement peut être reliée au bornier (+)(potentiel haut) ou au bornier (-) (potentiel bas), d'un boîtier de raccordement d'un groupe de modules suivant par des moyens, par exemple un câble, de connexion 43₄,45₄, 47₄; mais ce boîtier de raccordement précédent n'est pas forcément celui qui suit immédiatement, dans la série, le boîtier de raccordement considéré ;
- ou une barrette de masse d'un boîtier de raccordement peut être reliée au bornier (+)(potentiel haut) ou au bornier (-)(potentiel bas) du groupe de module i lui-même.

Les principes énoncés ci-dessus restent applicables si les groupes 40, 42, 44, 46 sont constitués chacun de plusieurs chaînes connectées en parallèles de modules, chaque chaîne comportant un ensemble de modules en série. Ce sont alors les chaînes qui sont connectées en parallèle sur les premiers borniers et deuxièmes borniers. L'ensemble des cadres des modules d'un groupe peut alors être mis à un même potentiel par une connexion au bornier de masse du groupe, lui-même pouvant être mis à un potentiel non-nul selon les principes précédemment expliqués.

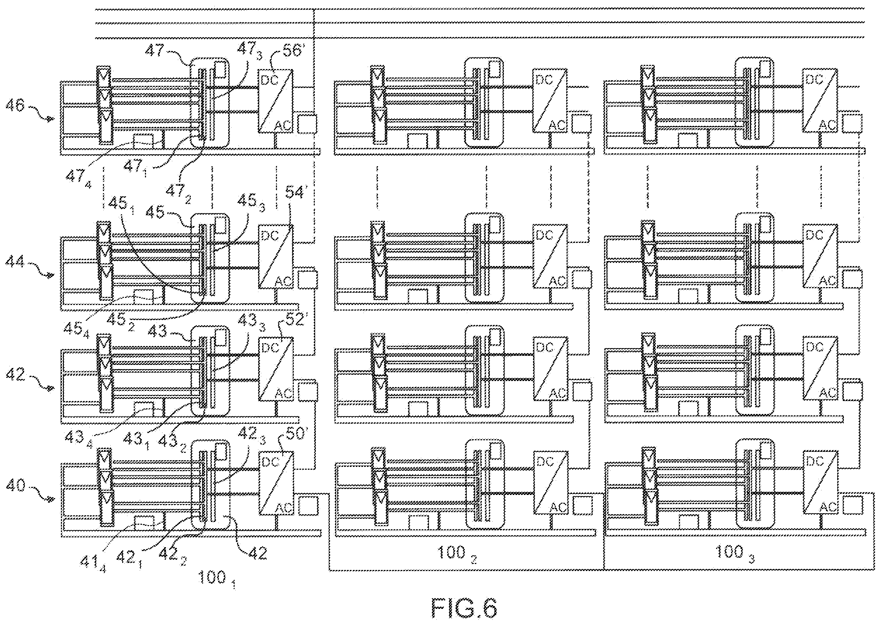

Dans la réalisation illustrée en figure 6, chacun des 3 ensembles 100₁, 100₂, 100₃ de N (dans cet exemple : N = 4, mais N peut être quelconque) groupes 40, 42, 44, 46 de modules. Pour des raisons de clarté, seuls les modules du 1^{er} ensemble 100₁ et les éléments auxquels ils sont connectés sont numérotés sur la figure. Chacun de ces ensembles est connecté à une ligne L₁, L₂, L₃ d'un réseau, par exemple un réseau en moyenne tension de type HTA. Chaque ensemble est identique à celui décrit en lien avec la figure 5, sauf pour les convertisseurs 50', 52', 54', 56' qui sont ici de type DC/AC.

Les N groupes 40, 42, 44, 46 de chacun des 3 ensembles 100₁, 100₂, 100₃ sont connectés en série par l'intermédiaire de convertisseurs DC/AC 50', 52', 54', 56', lesquels sont eux-mêmes connectés aux lignes L₁, L₂, L₃ d'un réseau, par exemple un réseau en moyenne tension de type HTA.

A l'intérieur de chacun des ensembles 100₁, 100₂, ou 100₃, la connection des cadres ou châssis des N groupes de modules peut être la suivante (déjà décrite ci-dessus): chaque cadre ou châssis de chaque groupe n° i (1<i≤N) dans la série peut être au potentiel d'entrée de ce groupe i et/ou du convertisseurs DC/AC correspondant 50', 52', 54', 56'. Là encore, l'effet de protection des cellules de chaque module est celui déjà présenté ci-dessus.

En variante (non représentée), à l'intérieur de chacun des ensembles 100₁, 100₂, ou 100₃, la connection des masses des N groupes de modules est la suivante (déjà décrite ci-dessus): la masse commune de chaque groupe n° i (1<i≤N) dans la série est au potentiel du groupe (i-1) qui précède (et dont la tension de sortie est inférieure à celle des modules du groupe considéré). Là encore, l'effet de protection des cellules de chaque module est celui déjà présenté ci-dessus.

La variante explicitée pour la figure 5, dans laquelle les modules connectés en parallèle au sein de chaque groupe sont remplacés par des chaînes connectées en parallèle de modules reste ici également applicable.

Comme on le comprend de la description ci-dessus, l'ensemble des masses métalliques d'un groupe (ou chaine) de modules selon l'invention n'est pas connecté aux masses métalliques d'un autre groupe ou chaîne de modules.

Il est donc préférable d'installer des moyens isolateurs comme par exemple : http://www.teknomega.com/components-for-panel-boards/low-voltage-insulators/low-voltage-insulators-comprhex.kl ou des matériaux isolants type PVC, Bakélite, Carton, Caoutchouc, ainsi que la plupart des plastiques, entre les structures porteuses de deux groupes de modules différents, dont le dimensionnement sera adapté en fonction de la structure et de sa configuration.

Les structures des figures 5 et 6 permettent d'éviter les transformateurs entre les lignes du réseau et les modules.

L'invention est adaptée à la réalisation de centrales solaires de puissance jusqu'à 10 MW et plus, et même au-delà de 1GW.

## Revendications

1. Centrale photovoltaïque comportant N modules photovoltaïques ou N chaînes (20, 22, 24) de modules photovoltaïques ou N groupes (40, 42, 44, 46) de modules photovoltaïques, avec N>1, connectés en série, chaque module comportant un cadre (20c, 22c, 24c) ou châssis, des moyens (23, 25, 27, 29, 43₄, 45₄, 47₄) de connexion, **caractérisé en ce que** les moyens de connexion connectent le cadre ou châssis d'au moins un module à un point de connexion d'un module ou d'une chaîne ou d'un groupe de la centrale photovoltaïque, qui est le point de potentiel haut du module, ou de la chaîne ou du groupe qui précède, dans la série, ledit au moins un module ou la chaîne, à laquelle ledit au moins un module appartient ou le groupe auquel ledit au moins un module appartient.

2. Centrale photovoltaïque selon l'a revendication 1, comportant N modules photovoltaïques formant une chaîne ou N chaînes (20, 22, 24) de modules photovoltaïques, dans laquelle les cadres de tous les modules d'une même chaîne sont au même potentiel.

3. Centrale photovoltaïque selon la revendication 1, comportant N groupes (40, 42, 44, 46) de modules photovoltaïques, connectés en série, les modules de chaque groupe étant connectés en parallèle à des moyens de connexion (41, 43, 45, 47), comportant un premier bornier (41₁, 43₁, 45₁, 47₁), un deuxième bornier (41₂, 43₂, 45₂, 47₂), et un bornier de masse (41₃, 43₃, 45₃, 47s), les sorties basse tension de chaque module d'un même groupe étant reliées au premier bornier du boîtier de connexion associé, les sorties hautes de chaque module du même groupe étant reliées au deuxième bornier dudit boîtier de connexion,.

4. Centrale photovoltaïque selon la revendication 3, chaque boîtier de connexion étant lui-même connecté un convertisseur DC/DC (50, 52, 54, 56) ou DC/AC (50', 52', 54', 56').

5. Centrale photovoltaïque selon la revendication 4, chaque convertisseur étant de type DC/DC (50, 52, 54, 56), l'ensemble de ces convertisseurs étant relié en série et les bornes basse tension et haute tension de cet ensemble de convertisseurs étant reliées à un convertisseur DC/AC (62).

6. Centrale photovoltaïque selon la revendication 4, comportant plusieurs ensembles (100₁, 100₂, 100₃) de groupes (40, 42, 44, 46) de plusieurs modules photovoltaïques, chaque convertisseur étant de type DC/AC (50', 52', 54', 56'), les convertisseurs de chaque ensemble étant reliés en série et à une des lignes (L₁, L₂, L₃) d'un réseau électrique, par exemple un réseau en moyenne tension.

7. Centrale photovoltaïque selon la revendication 6, comportant 3 ensembles (100₁, 100₂, 100₃) de groupes (40, 42, 44, 46) de modules photovoltaïques.

8. Centrale photovoltaïque selon l'une des revendications 3 à 7, comportant en outre des moyens d'isolation électrique entre deux groupes de modules différents.

9. Procédé de fonctionnement d'une centrale photovoltaïque, comportant N modules photovoltaïques ou N chaînes (20, 22, 24) de modules photovoltaïques ou N groupes (40, 42, 44, 46) de modules photovoltaïques, avec N >1, connectés en série, chaque module comportant un cadre (20c, 22c, 24c) ou châssis, procédé dans lequel on applique au cadre (20c, 22c, 24c) ou châssis d'au moins un module, un potentiel égal au potentiel haut du module ou de la chaîne ou du groupe de modules de la centrale qui précède immédiatement, dans la série, ledit au moins un module ou la chaîne à laquelle ledit au moins un module appartient ou le groupe auquel ledit au moins un module appartient.

10. Procédé selon la revendication 9, la centrale photovoltaïque comportant N modules photovoltaïques formant une chaîne ou N chaînes (20, 22, 24) de modules photovoltaïques, dans laquelle les cadres de tous les modules d'une même chaîne sont portés au même potentiel.

11. Procédé selon l'une des revendications 9 ou 10, dans lequel la centrale photovoltaïque comporte N groupes (40, 42, 44, 46) de modules photovoltaïques, connectés en série, les modules de chaque groupe étant connectés en parallèle à des moyens de connexion (41, 43, 45, 47), comportant un premier bornier (41₁, 43₁, 45₁, 47₁), un deuxième bornier (41₂, 43₂, 45₂, 47₂), et un bornier de masse (41₃, 43₃, 45₃, 47s), les sorties basse tension de chaque module d'un même groupe étant reliées au premier bornier du boîtier de connexion associé, les sorties hautes tension de chaque module du même groupe étant reliées au deuxième bornier dudit boîtier de connexion, les cadres ou châssis de chaque module d'un même groupe étant reliées au bornier de masse dudit boîtier de connexion.

12. Procédé selon la revendication 11, chaque boîtier de connexion étant lui-même connecté un convertisseur DC/DC (50, 52, 54, 56) ou DC/AC (50', 52', 54', 56').

13. Procédé selon la revendication 12, chaque convertisseur étant de type DC/DC (50, 52, 54, 56), l'ensemble de ces convertisseurs étant relié en série et les bornes basse tension et haute tension de cet ensemble de convertisseurs étant reliées à un convertisseur DC/AC (62).

14. Procédé selon la revendication 13, la centrale photovoltaïque comportant plusieurs ensembles (100₁, 100₂, 100₃) de groupes (40, 42, 44, 46) de plusieurs modules photovoltaïques, chaque convertisseur étant de type DC/AC (50', 52', 54', 56'), les convertisseurs de chaque ensemble étant reliés en série et à une des lignes (L₁, L₂, L₃) d'un réseau électrique, par exemple un réseau en moyenne tension.

15. Procédé selon la revendication 14, la centrale photovoltaïque comportant 3 ensembles (100₁, 100₂, 100₃) de groupes (40, 42, 44, 46) de modules photovoltaïques.

## Patentansprüche

1. Photovoltaikanlage, die N Photovoltaikmodule oder N Ketten (20, 22, 24) von Photovoltaikmodulen oder N Gruppen (40, 42, 44, 46) von Photovoltaikmodulen, wobei N>1, umfasst, die in Reihe geschaltet sind, wobei jedes Modul einen Rahmen (20c, 22c, 24c) oder ein Gestell und Verbindungsmittel (23, 25, 27, 29, 43₄, 45₄, 47₄) umfasst,
**dadurch gekennzeichnet, dass** die Verbindungsmittel den Rahmen oder das Gestell mindestens eines Moduls mit einem Verbindungspunkt eines Moduls oder einer Kette oder einer Gruppe der Photovoltaikanlage verbindet, der der Hochpotentialpunkt des Moduls oder der Kette oder der Gruppe ist, der in der Reihe dem mindestens einen Modul oder der Kette, zu der das mindestens eine Modul gehört, oder der Gruppe, zu der das mindestens eine Modul gehört, vorausgeht.

2. Photovoltaikanlage nach Anspruch 1, die N Photovoltaikmodule umfasst, die eine Kette oder N Ketten (20, 22, 24) von Photovoltaikmodulen bilden, wobei die Rahmen aller Module derselben Kette an dem gleichen Potential liegen.

3. Photovoltaikanlage nach Anspruch 1, die N Gruppen (40, 42, 44, 46) von Photovoltaikmodulen umfasst, die in Reihe geschaltet sind, wobei die Module jeder Gruppe parallel mit Verbindungsmitteln (41, 43, 45, 47) verbunden sind, die einen ersten Anschluss (41₁, 43₁, 45₁, 47₁), einen zweiten Anschluss (41₂, 43₂, 45₂, 47₂) und einen Erdungsanschluss (41₃, 43₃, 45₃, 47₃) umfassen, wobei die Niederspannungsausgänge jedes Moduls derselben Gruppe mit dem ersten Anschluss des zugehörigen Anschlusskastens verbunden sind, wobei die Hochspannungsausgänge jedes Moduls derselben Gruppe mit dem zweiten Anschluss des Anschlusskastens verbunden sind.

4. Photovoltaikanlage nach Anspruch 3, wobei jeder Anschlusskasten selbst mit einem DC/DC-Wandler (50, 52, 54, 56) oder einem DC/AC-Wandler (50', 52', 54', 56') verbunden ist.

5. Photovoltaikanlage nach Anspruch 4, wobei jeder Wandler vom DC/DC-Typ (50, 52, 54, 56) ist, wobei alle diese Wandler in Reihe geschaltet sind und die Niederspannungs- und Hochspannungsanschlüsse aller Wandler mit einem DC/AC-Wandler (62) verbunden sind.

6. Photovoltaikanlage nach Anspruch 4, die mehrere Anordnungen (100₁, 100₂, 110₃) von Gruppen (40, 42, 44, 46) mehrerer Photovoltaikmodule umfasst, wobei jeder Wandler vom DC/AC-Typ (50', 52', 54', 56') ist, wobei die Wandler jeder Anordnung in Reihe geschaltet und mit einer der Leitungen (L₁, L₂, L₃) eines elektrischen Netzes, zum Beispiel eines Mittelspannungsnetzes, verbunden sind.

7. Photovoltaikanlage nach Anspruch 6, die 3 Anordnungen (100₁, 100₂, 110₃) von Gruppen (40, 42, 44, 46) von Photovoltaikmodulen umfasst.

8. Photovoltaikanlage nach einem der Ansprüche 3 bis 7, die ferner Mittel für die elektrische Isolierung zwischen zwei Gruppen unterschiedlicher Module umfasst.

9. Verfahren zum Betreiben einer Photovoltaikanlage, die N Photovoltaikmodule oder N Ketten (20, 22, 24) von Photovoltaikmodulen oder N Gruppen (40, 42, 44, 46) von Photovoltaikmodulen, wobei N>1, umfasst, die in Reihe geschaltet sind, wobei jedes Modul einen Rahmen (20c, 22c, 24c) oder ein Gestell umfasst, Verfahren wobei dem Rahmen (20c, 22c, 24c) oder dem Gestell mindestens eines Moduls ein Potential angelegt wird, das dem Hochpotential des Moduls oder der Kette oder der Modulgruppe der Anlage gleicht, die in der Reihe, dem mindestens einen Modul oder der Kette, zu der mindestens ein Modul gehört, oder der Gruppe, zu der das mindestens eine Modul gehört, direkt vorausgeht

10. Verfahren nach Anspruch 9, wobei die Photovoltaikanlage N Photovoltaikmodule umfasst, die eine Kette oder N Ketten (20, 22, 24) von Photovoltaikmodulen bilden, wobei die Rahmen aller Module derselben Kette an dem gleichen Potential liegen.

11. Verfahren nach einem der Ansprüche 9 oder 10, wobei die Photovoltaikanlage N Gruppen (40, 42, 44, 46) von Photovoltaikmodulen umfasst, die in Reihe geschaltet sind, wobei die Module jeder Gruppe parallel mit Verbindungsmitteln (41, 43, 45, 47) verbunden sind, die einen ersten Anschluss (41₁, 43₁, 45₁, 47₁), einen zweiten Anschluss (41₂, 43₂, 45₂, 47₂) und einen Erdungsanschluss (41₃, 43₃, 45₃, 47₃) umfassen, wobei die Niederspannungsausgänge jedes Moduls einer selben Gruppe mit dem ersten Anschluss des zugehörigen Anschlusskastens verbunden sind, wobei die Hochspannungsausgänge jedes Moduls derselben Gruppe mit dem zweiten Anschluss des Anschlusskastens verbunden sind, wobei die Rahmen oder Gestelle jedes Moduls einer selben Gruppe mit dem Erdungsanschluss des Anschlusskastens verbunden sind

12. Verfahren nach Anspruch 11, wobei jeder Anschlusskasten selbst mit einem DC/DC-Wandler (50, 52, 54, 56) oder einem DC/AC-Wandler (50', 52', 54', 56') verbunden ist.

13. Verfahren nach Anspruch 12, wobei jeder Wandler vom DC/DC-Typ (50, 52, 54, 56) ist, wobei alle diese Wandler in Reihe geschaltet sind und die Niederspannungs- und Hochspannungsanschlüsse dieser Anordnung von Wandlern mit einem DC/AC-Wandler (62) verbunden sind.

14. Verfahren nach Anspruch 13, wobei die Photovoltaikanlage mehrere Anordnungen (100₁, 100₂, 110₃) von Gruppen (40, 42, 44, 46) mehrerer Photovoltaikmodule umfasst, wobei jeder Wandler vom DC/AC-Typ (50', 52', 54', 56') ist, wobei die Wandler jeder Anordnung in Reihe geschaltet und mit einer der Leitungen (L₁, L₂, L₃) eines elektrischen Netzes, zum Beispiel eines Mittelspannungsnetzes, verbunden sind.

15. Verfahren nach Anspruch 14, wobei die Photovoltaikanlage 3 Anordnungen (100₁, 100₂, 110₃) von Gruppen (40, 42, 44, 46) von Photovoltaikmodulen umfasst.

## Claims

1. Photovoltaic unit including N photovoltaic modules or N chains (20, 22, 24) of photovoltaic modules or N groups (40, 42, 44, 46) of photovoltaic modules, with N>1, connected in series, each module including a frame (20c, 22c, 24c) or chassis, and connection means (23, 25, 27, 29, 43₄, 45₄, 47₄), **characterised in that** the connection means connect the frame or chassis of at least one module to a connection point of a module or of a chain or of a group of the photovoltaic unit, which is the high-potential point of the model, or of the chain or of the group that precedes, in the series, said at least one module or the chain to which said at least one module belongs or the group to which said at least one module belongs.

2. Photovoltaic unit according to claim 1, including N photovoltaic modules forming a chain or N chains (20, 22, 24) of photovoltaic modules, wherein the frames of all the modules of one and the same chain are at the same potential.

3. Photovoltaic unit according to claim 1, including N groups (40, 42, 44, 46) of photovoltaic modules, connected in series, the modules of each group being connected in parallel to connection means (41, 43, 45, 47), including a first terminal block (41₁, 43₁, 45₁, 47₁), a second terminal block (41₂, 43₂, 45₂, 47₂), and an earth terminal block (41₃, 43₃, 45₃, 47₃), the low-voltage outputs of each module of one and the same group being connected to the first terminal block of the associated connection box, the high outputs of each module of one and the same group being connected to the second terminal block of said connection box

4. Photovoltaic unit according to claim 3, each connection box being itself connected to a DC/DC converter (50, 52, 54, 56) or DC/AC converter (50', 52', 54', 56').

5. Photovoltaic unit according to claim 4, each converter being of the DC/DC type (50, 52, 54, 56), all of these converters being connected in series and the low-voltage and high-voltage terminals of this set of converters being connected to a DC/AC converter (62).

6. Photovoltaic unit according to claim 4, including a plurality of sets (100₁, 100₂, 100₃) of groups (40, 42, 44, 46) of several photovoltaic modules, each converter being of the DC/AC type (50', 52', 54', 56'), the converters of each set being connected in series and to one of the lines (L₁, L₂, L₃) of an electrical network, for example a medium-voltage network.

7. Photovoltaic unit according to claim 6, including three sets (100₁, 100₂, 100₃) of groups (40, 42, 44, 46) of photovoltaic modules.

8. Photovoltaic unit according to one of claims 3 to 7, furthermore including means of electrical isolation between two groups of different modules.

9. Method for operating a photovoltaic unit, including N photovoltaic modules or N chains (20, 22, 24) of photovoltaic modules or N groups (40, 42, 44, 46) of photovoltaic modules, with N>1, connected in series, each module including a frame (20c, 22c, 24c) or chassis, method wherein there is applied, to the frame (20c, 22c, 204c) or chassis of at least one module, a potential equal to the high potential of the module or of the chain or of the group of modules of the unit that immediately precedes, in the series, said at least one module or the chain to which said at least one module belongs or the group to which said at least one module belongs.

10. Method according to claim 9, the photovoltaic unit including N photovoltaic modules forming a chain or N chains (20, 22, 24) of photovoltaic modules, wherein the frames of all the modules of one and the same chain are at the same potential.

11. Method according to one of claims 9 or 10, wherein the photovoltaic unit comprises N groups (40, 42, 44, 46) of photovoltaic modules, connected in series, the modules of each group being connected in parallel to connection means (41, 43, 45, 47), including a first terminal block (41₁, 43₁, 45₁, 47₁), a second terminal block (41₂, 43₂, 45₂, 47₂), and an earth terminal block (41₃, 43₃, 45₃, 47₃), the low-voltage outputs of each module of one and the same group being connected to the first terminal block of the associated connection box, the high-voltage outputs of each module of one and the same group being connected to the second terminal block of said connection box, the frames or chassis of each module of one and the same group being connected to the earth terminal block of said connection box.

12. Method according to claim 11, each connection box being itself connected to a DC/DC converter (50, 52, 54, 56) or DC/AC converter (50', 52', 54', 56').

13. Method according to claim 12, each converter being of the DC/DC type (50, 52, 54, 56), all of these converters being connected in series and the low-voltage and high-voltage terminals of this set of converters being connected to a DC/AC converter (62).

14. Method according to claim 13, the photovoltaic unit including a plurality of sets (100₁, 100₂, 100₃) of groups (40, 42, 44, 46) of several photovoltaic modules, each converter being of the DC/AC type (50', 52', 54', 56'), the converters of each set being connected in series and to one of the lines (L₁, L₂, L₃) of an electrical network, for example a medium-voltage network.

15. Method according to claim 14, the photovoltaic unit including three sets (100₁, 100₂, 100₃) of groups (40, 42, 44, 46) of photovoltaic modules.
